# EUROPEAN PATENT APPLICATION

(11) **EP 1 947 311 A2**
(43) Date of publication of application: **23.07.2008**
(21) Application number: 08250160.2
(22) Date of filing: 14.01.2008
(51) Int. Cl.: F02C 7/32

(54) **Turbine engine transient power extraction system and method**

(30) Priority: 17.01.2007 US 654129
(71) Applicant: United Technologies Corporation, Hartford, CT 06101 (US)
(72) Inventor: Jones, Stephen R., Columbia, CT 06237 (US); Southwick, Robert D., S. Glastonbury, CT 06073 (US)
(74) Representative: Leckey, David Herbert

(57) **Abstract**

A power extraction system (12) for a gas turbine engine (10) comprises a low spool generator (30), a high spool generator (32) and a power controller (34). The low spool generator (30) extracts power from a low spool (14) of the gas turbine engine (10), and the high spool generator (32) extracts power from a high spool (16) of the gas turbine engine (10). The power controller (34) receives power extracted by the low spool generator (30) and the high spool generator (32) and distributes the received power to provide an uninterrupted steady state power supply (SS) and a transient power supply (T) larger than what is available individually from the low and high spool generators (30, 32). In embodiment of the invention, the power extraction system includes an engine controller (20) that operates in conjunction with the power controller (34) to increase inertia energy of the low spool (14) and high spool (16) to increase electric power supply, while engine excursion is reduced and consistent engine thrust is maintained.

## Description

### BACKGROUND OF THE INVENTION

This invention relates generally to gas turbine engines, and more particularly to electrical power extraction systems and methods for gas turbine engines. Dual-spool, turbofan, gas turbine engines comprise a high pressure spool ("high spool") and a low-pressure spool ("low spool"), which are coaxially aligned along an engine centerline. The high pressure spool comprises a high pressure compressor and turbine, which is nested between a low-pressure compressor and turbine that form the low pressure spool. A combustion process carried out between the compressors and turbines turns the turbines such that they drive the compressors to supply compressed air to the combustion process. As such, the gas turbine engine is able to sustain operation and produce thrust for driving an aircraft, with most of the thrust being generated by a fan driven by the low spool. In addition to supplying the propulsive thrust for an aircraft, gas turbine engines are also required to supply electrical power to auxiliary engine and aircraft systems. This is typically done through a generator driven by the high pressure spool of the gas turbine engine.

Since gas turbine engines require a steady supply of compressed air to sustain combustion and operation, gas turbine engines must be started by a starter system, which typically comprises a starter motor connected to the high pressure spool through a gear train. Thus, once the engine is started, it is convenient to simply use the starter motor, which is driven by the started engine, as the generator. The amount of power that can be extracted from the high spool is, however, limited due to the narrow stability margin of the high pressure compressor. Specifically, drawing power from the high pressure spool necessarily requires a slowdown in the in the rotor speed of the high spool, which can lead to compressor stall. Thus, the high spool is typically limited to supplying low power, steady state loads.

In order to eliminate the risk of compressor stall, and to increase the extracted power capability, a second generator can be implemented on the low spool. The risk of compressor stall on the low spool is significantly less than the high spool; therefore it is possible to draw much higher steady-state loads from the low spool. However, low spool power generators still do not supply enough power as is demanded by some heavy transient power load systems. For example, recent advancements in directed energy weapons (DEWs) have lead to their implementation in aircraft with heavy demands for electrical power. DEWs require large intermittent bursts of power to produce a directed energy pulse. Transient loads are particularly burdensome on engine operation because they require large initial loads that produce engine excursion, sudden variations in rotor speeds, which lead to engine instability and low quality power. The transient power requirements of DEWs typically exceed the capacity of either a low spool or high spool generator. As such, the current approach to obtain the required electric power for these systems demands large capacitors and electrical control systems. The capacitors can either be powered by the propulsion system generators or by a secondary, dedicated power supply system called an auxiliary power unit (APU). Even when coupled with a capacitor, drawing large transient loads from the generators produces an engine excursion with a considerable burden on rotor speeds of the high and low spools, which can lead to compressor instability and to inconsistent engine thrust performance. In the case of capacitors, extraneous power control systems and particularly a dedicated APU, these systems add considerable weight to the aircraft. As such there is a need for a gas turbine transient power extraction system that is less disruptive of engine and aircraft performance.

### BRIEF SUMMARY OF THE INVENTION

The present invention in one aspect is directed toward a power extraction system and method for a gas turbine engine. The power extraction system comprises a low spool generator, a high spool generator and a power controller. The low spool generator extracts power from a low spool of the gas turbine engine, and the high spool generator extracts power from a high spool of the gas turbine engine. The power controller receives power extracted by the low spool generator and the high spool generator and distributes the received power to provide an uninterrupted steady state power supply and a transient power supply larger than what is available individually from the low and high spool generators.

In an embodiment of the invention, the power extraction system includes an engine controller that operates in conjunction with the power controller to increase inertia energy of the low spool and high spool to increase electric power supply, while engine excursion is reduced and consistent engine thrust is maintained.

### BRIEF DESCRIPTION OF THE DRAWINGS

FIG. 1 shows a schematic of a gas turbine engine, in which the power extraction system of the present invention is used.
FIG. 2 shows the gas turbine engine of FIG. 1 in which the power extraction system distributes power to both steady state and transient loads.
FIG. 3 shows a graph comparing engine excursion over the life of a transient power load cycle for leveraged spool extraction of the present invention and a prior art system.
FIG. 4A shows a gas turbine engine having a transient power system of the present invention in a precursor mode for a large pulse transient load.
FIG. 4B shows the transient power system of FIG. 4A in a pulse initiation mode.
FIG. 4C shows the transient power system of FIG. 4B in an active pulse mode.
FIG. 4D shows the transient power system of FIG. 4C in a pulse discharge mode.
FIG. 5 shows a graph comparing engine excursion over the life of a large pulse transient load cycle for active extraction control of the present invention and a prior art system.
FIG. 6 shows a graph of engine excursion for a gas turbine engine using a high inertia extraction mode of the power extraction system of the present invention.

### DETAILED DESCRIPTION

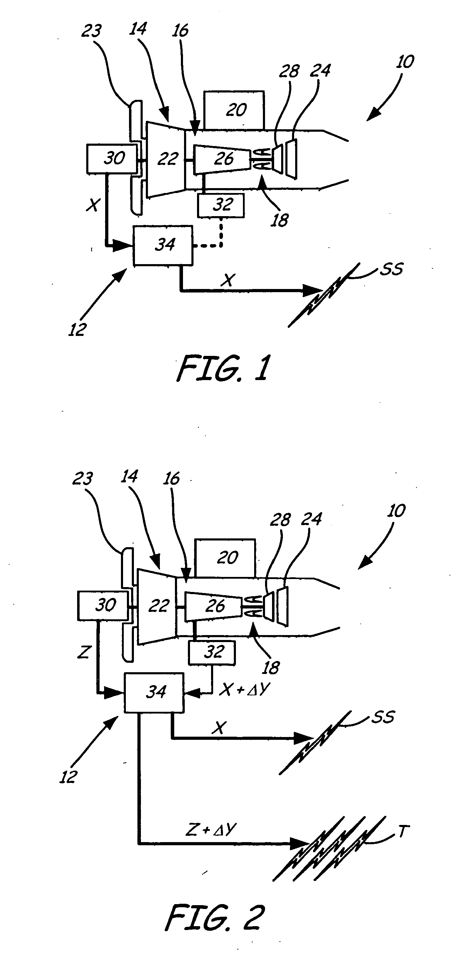

FIG. 1 shows gas turbine engine 10 in which power extraction system 12 of the present invention is used. Gas turbine engine 10 comprises a dual-spool, turbofan engine typically used for aircraft propulsion and in which the advantages of the present invention are particularly well illustrated. Although the invention is hereinafter described as a dual-spool engine, the present invention is suitable for other types of engines, such as three spool engines, as well. Gas turbine engine 10, of which the operational principles are well known in the art, comprises low pressure spool 14, high pressure spool 16, combustor 18 and engine controller 20, and includes power extraction system 12. Low spool 14 comprises low pressure compressor (LPC) 22, drive fan 23 and low pressure turbine (LPT) 24. High spool 16 comprises high pressure compressor (HPC) 26 and high pressure turbine (HPT) 28. Power extraction system 12 comprises low spool generator 30, high spool generator-starter 32 and power controller 34.

Gas turbine engine 10 operates in a conventional manner such that inlet air enters engine 10 whereby it is divided into streams of primary air and secondary air as it passes through drive fan 23. Drive fan 23 and LPC 22 are rotated by low-pressure turbine 24 through a shaft to accelerate the secondary air, thereby utilizing drive fan 23 to produce a major portion of the thrust output of engine 10. The primary air is directed first into low-pressure compressor 22 and then into high pressure compressor 26. LPC 22 and HPC 26 work together to incrementally step up the pressure of the primary air. HPC 26 is rotated by high-pressure turbine 28 through a shaft to provide compressed air to combustor 18. The compressed air is delivered to combustor 18, along with fuel through a set of injectors, such that a combustion process can be carried out to produce the high-energy gases necessary to turn turbines 24 and 28. The primary air continues through gas turbine engine 10 whereby it is typically passed through an exhaust nozzle to produce thrust. Thus, gas turbine engine 10 is able to sustain operation by continued, coordinated rotation of turbines 24 and 28 through the combustion process. Engine controller 20, which is connected to other engine and aircraft flight control systems, controls the operation of high spool 16, low spool 14 and other systems such as variable vanes and variable inlet and exhaust nozzles.

High spool 16 is speed governed by engine fuel requirements. As more thrust is demanded from engine 10, more fuel is injected into combustor 18. Accordingly, HPC 26 must provide the proper amount of pressurized air to combustor 18 such that the combustion process can be carried out in a controlled manner. Low spool 14 speed is governed by the remaining energy carried from high spool 16 turbine 28 to LPT 24 to drive fan 23 and LPC 22. The low spool 14 system distributes this energy between the thrust producing fan stream and the HPC 26 air, flow requirements. Engine controller 20 manages the fuel supply, nozzle system, vane systems, and other system components to produce usable thrust while preventing compressor surge during operation of engine 10.

In order to initiate combustion, however, gas turbine engine 10 must be started by an external power source. Specifically, HPC 26 must be started such that the compressed air can be initially supplied to combustor 18. Thus, gas turbine engine 10 is traditionally fitted with high spool starter 32 to initially start the combustion process. Starter 32 is typically fitted on the case of engine 10 below HPC 26. Starter 32, which is connected to the shaft of HPC 26 through a gear train, is powered by an external power source to start engine 10. For example, compressed air may be used to rotate a turbine wheel to drive HPC 26 through the gear train. When connected with an external power supply, Starter 32 rotates high spool 16 at a speed such that HPC 26 provides a sufficient amount of compressed air to combustor 18 to begin and sustain combustion. After which, engine 10 becomes self-sustaining and the external power supply is uncoupled from starter 32. The gear train, however, remains in tact with HPC 26 such that rotational power can be continuously extracted from the high spool 16. Since the gear train is available to generate power typically small, steady state electric loads required for engine 10 operation and other aircraft systems are supplied via a separate electric generator or by configuring starter 32 as a dual use starter-generator.

Engine 10 is classically started by cranking the high spool 16. Since HPC 26 only compresses air directly to combustor 18 when the high spool 16 is externally powered, the energy input requirements are lower than needed by cranking the low spool 14. Therefore, it is convenient to position starter-generator 32 within engine 10 near high spool 16. However, generator-starter 32 is limited in its capacity to draw power from gas turbine engine 10, to avoid HPC 26 aerodynamic stall conditions. At high altitude, HPC 26 is more susceptible to stall conditions due to aerodynamic boundary layer effects on stall margin, further reducing the load capacity. When drawing power from high spool 16, generator-starter 32, as driven through the gear train, acts as a resistance to turbine 28. Thus, any power drawn from high spool 16 necessarily requires a slowdown in the rotational speed of low spool 16. If too much power is drawn, high spool 16 can slow creating HPC 26 stall conditions, causing engine unstart. Thus, in order to power larger loads from engine 10, generator 30 is provided on low spool 14.

Generator 30 can be physically attached to the low spool 14 in many locations including the fan drive 23 nosecone, the LPT 24 tailcone, and directly within the engine. Additionally, generator 30 could be driven like a traditional high spool generator 32 via a separate gear train to the outside case of the engine 10 or any other suitable location. Larger loads can be powered from low spool 14 because fan 23 and LPC 22 operate in a lower load regime making them much less susceptible to stall. Thus, once engine 10 is started, generator-starter 32 can be disengaged from HPC 32, or otherwise set to not draw power. Power generation can then be shifted over to generator 30. Power *X* generated by generator 30 is directed to power controller 34, whereby it is directed to steady state load *SS.* Typically, steady state load SS is small compared to the total output that can be generated by either generator 30 or generator-starter 32. Thus, FIG. 1 depicts engine 10 and power supply system 12 operating at normal, steady state operating conditions in which steady state loads, such as typical engine and aircraft systems, are powered. As such, it can be used for low or heavy load power requirements. When heavy initiation loads or heavy intermittent power requirements exceed the capacity of generator 30 alone, generator-starter 32 is used to provide additional power to controller 34.

FIG. 2 shows engine 10 and power supply system 12 operating to provide power to both steady state load *SS* and transient load *T.* In this leveraged operating mode, generator 30 and generator-starter 32 together extract the required power for powering both the steady state and transient loads, and direct it to power controller 34. Engine controller 20 coordinates the power extraction from engine 10 by optimizing operation of engine 10, thus reducing engine instability and variations in engine thrust output. Power controller 34 receives the total required power and distributes it as needed to steady state load SS and transient load *T.*

In order to power transient load *T*, generator 30 extracts power Z, which can be up to its designed maximum without overburdening the operation of fan 23 or LPC 22. Also, generator-starter 32 extracts power *X+ΔY,* which can be up to its designed maximum, from high spool 16 without overburdening the operation of HPC 26 (where ΔY is recognized as the transient spike during the initiation of a transient load). Power *Z* and power *X+ΔY* are delivered to power controller 34, where the power can be divided and distributed according to need. Thus, neither low spool 14 nor high spool 16 is required to generate the entire power requirement. As such, power *X* is delivered to steady state load *SS,* and power *Z+ΔY* is delivered to transient load *T.*

Power extraction system 12 extracts the desired amount of power from engine 10 with minimally disrupting the operation of both high spool 16 or low spool 14 such that engine excursion is reduced. In addition, larger loads than are individually available from generator 30 or generator-starter 32 are made available to, for example, power transient load *T*. Thus, power extraction system 12 leverages the inertia from the high spool and the low spool such that engine thrust continuity is maintained.

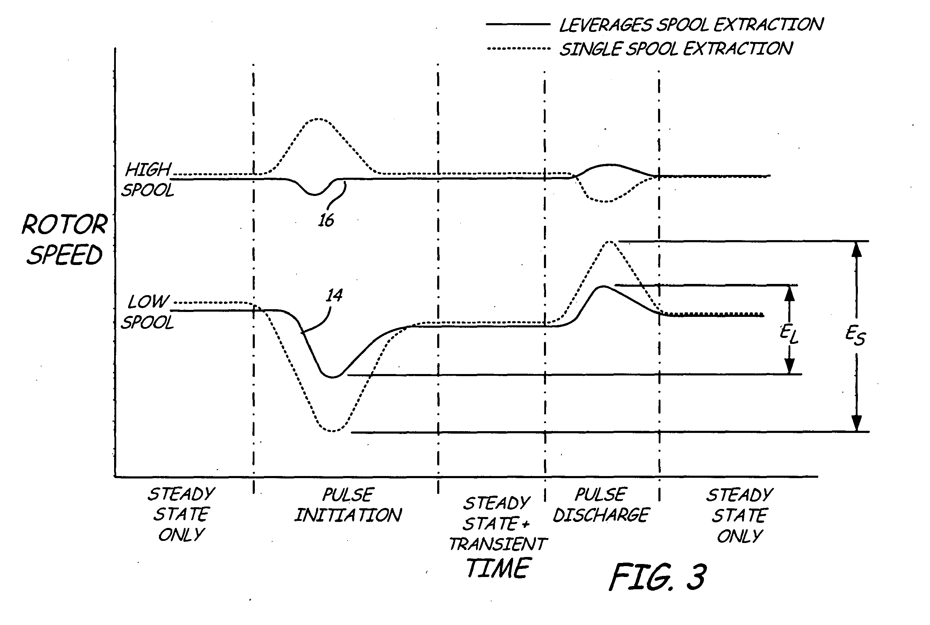

FIG. 3 shows a graph comparing engine excursion in terms of rotor speed over the life of a transient power load cycle for the leveraged power extraction system of the present invention versus power extraction from only the low spool. The solid lines indicate the rotor speed for the high and low spools during leveraged power extraction of the present invention, during which transient power is extracted from both high spool 16 and low spool 14. The dashed lines indicate rotor speed for single rotor transient power extraction without power extraction system 12 (i.e. without power controller 34) of the present invention. For example, single rotor transient power extraction can be achieved through use of only low spool 14 and generator 30, while generator-starter 32 provides steady state power needs. As can be seen from the graph, leveraged power extraction of the present invention, utilizing power extraction system 12, results in much smaller variations in rotor speed, thus leading to improved engine stability, better power quality, and consistent propulsive thrust. Specifically, engine excursion *E_{L}* of the present invention is much less than engine excursion *E_{S}* for single rotor transient power extraction.

The left side of FIG. 3 shows rotor speed for operation of engine 10 at normal operating conditions, such as illustrated in FIG. 1 for leveraged power extraction of the present invention. As such, typically only a small steady state load is being powered that is well within the limitations of generator 30 and generator-starter 32, collectively or individually. Thus, rotor speed for both the leveraged power extraction and single spool extraction are very nearly the same during steady state only power extraction.

During a pulse initiation phase, the transient load is switched "on" such that it requires a near instantaneous supply of power. As such, requirements on the generators are increased. In single rotor extraction, the demands on generator 30 are increased significantly, as it is the sole provider of energy to the transient load. In leveraged power extraction, demands on generator 30 are increased less, and generator-starter 32 is engaged to provide additional power generation. As such, one single generator does not carry the burden of providing the entire power requirement for the transient load.

In the single rotor extraction operational mode, power for transient load *T* is drawn from generator 30 only. As such, when transient load *T* is switched on, low spool 14 incurs additional resistance and hence a significant reduction in rotor speed: Engine controller 20 detects the associated drop in thrust output of engine 10 due to the decrease in the speed of low spool 14. Engine controller 20 then attempts to increase thrust production of engine 10 by, among other things, increasing the combustor fuel. This increases high spool 16 and low spool 14 rotational speeds until the speed of low spool 14 is increased back to steady state levels and thrust level is brought back to the pre-transient load state. As low spool 14 returns to speed, high spool 16 also returns back to steady state speeds. During steady state plus transient operation, engine 10 carries on operating close to steady state levels until transient load *T* is removed during pulse discharge mode.

During pulse discharge mode, the additional load of transient load *T* is removed from generator 30 of low spool 14. As such, low spool 14 undergoes a sharp increase in rotational speed, before engine controller 20 has an opportunity to correct or stabilize operation of engine 10. Correspondingly, since low spool 14, including fan 23, increases speed the thrust output of engine 12 increases. Thus, high spool 16 undergoes a drop in rotational speed as engine controller 20 attempts to reduce fuel and power down to maintain thrust output constant. Again, low spool 14 and high spool 16 gradually return to steady state speeds as engine operation stabilizes and thrust output is maintained.

As described above, in single spool extraction both high spool 16 and low spool 14 undergo significant fluctuations in rotor speed. Rotor speed fluctuation is particularly detrimental to steady performance of engine 10 because drive fan 23 of low spool 14 produces a major portion of the thrust of engine 10. Thus, any variation in the speed of low spool 14 disrupts steady state thrust production of engine 10, which is not only disruptive of flight operations and passenger comfort, but has the potential for stalling engine 10. Single rotor extraction results in a large rotor and engine thrust excursions Eₛ, as indicated in FIG. 3. The present invention, including power extraction system 12 reduces engine excursion levels such that improved engine stability and power quality is obtained.

In the leveraged power extraction mode, power controller 34 initiates power extraction from starter-generator 32 of high spool 16, as steady state power extraction is already being sustained at low spool 14 and generator 30. As such, there is a corresponding increase in the speed of high spool 16 as engine controller 20 adds more fuel to maintain steady state thrust production and high spool 16 supplies power to generator-starter 30. As shown in FIG. 3, high spool 16 undergoes an increase in rotor speed when transient load *T* is initiated. Since, however, in the leveraged power extraction model, power is simultaneously being generated to supply the transient load by low spool 14, the increase in rotor speed of high spool 16 is less than compared to single spool extraction.

In leveraged power extraction mode, generator 30 is already engaged and extracting power from low spool 14. Once transient load *T* is switched on, the power extraction requirement of generator 30 is suddenly ramped up. Low spool 14 initially undergoes a drop in rotor speed as demands on generator 30 are rapidly increased. Because the leveraged power extraction mode also loads high spool 16, low spool 14 rotor speed impact is reduced. As indicated in FIG. 3, low spool 14 undergoes a significant drop in rotor speed when transient load *T* is switched on. Once the load is applied, the rotor speed of low spool 14 ramps back up, as engine controller 20 increases fuel flow to hold consistent thrust.

Throughout the transient loading state, or pulse on phase, engine controller 20 attempts to maintain steady operation of engine 10 such that thrust production is maintained constant. As with single spool extraction, high spool 16 and low spool 14 gradually return to pre-transient load operation as engine controller 20 adjusts engine fuel flow to maintain the rotor speeds and thrust. As indicated by the instabilities in both low spool 14 and high spool 16, engine 10 undergoes engine excursion *E_{L},* which is a reduced disruption in performance as compared to single rotor power extraction engine excursion *Eₛ.* Thus, transient power extraction system 12 reduces engine excursion with a resulting reduction in the risk of engine stall and increase in power quality and quantity. The capability of power extraction system 12 to extract power from engine 10 can be further improved by pre-conditioning, the speeds of high spool 16 and low spool 14 with engine controller 20 before transient load *T* is incurred.

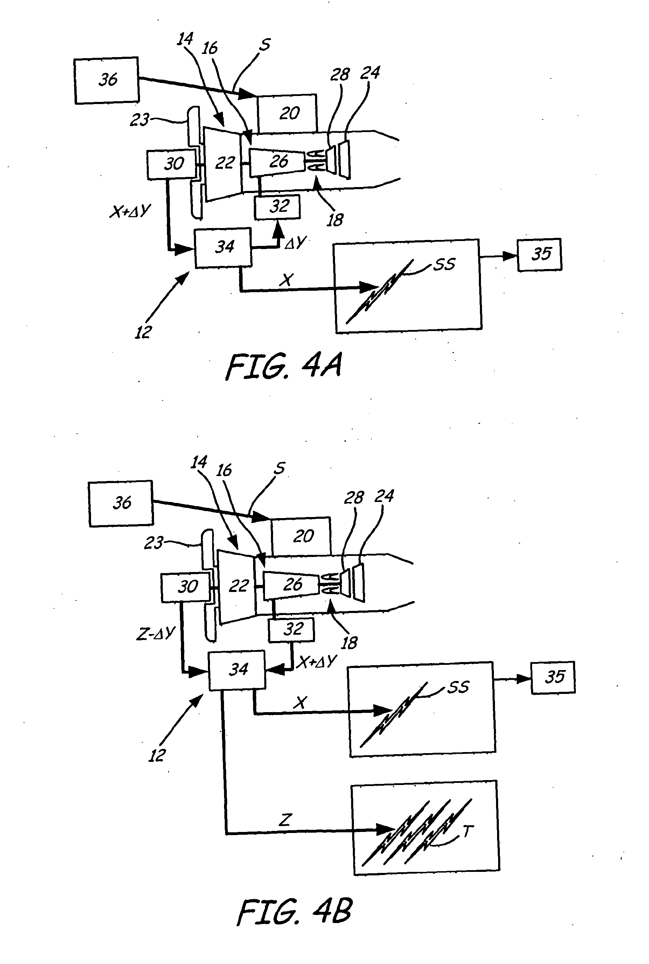

FIG. 4A shows gas turbine engine 10 having transient power system 12 of the present invention with a precursor capability providing an early alert of a large transient load or pulse load. Engine 10 provides steady state power SS to engine and aircraft systems 35 utilizing power generated from generator 30. Engine 10 has load signal controller 36 to alert engine 10 of a pending large electric power load. In response to precursor signal *S*, power extraction system 12 selectively increases the inertia energy of high spool 16 by driving electric power ΔY from generator 30 into starter-generator 34.

In anticipation of loading or charging for a pulse, load signal control 36 sends precursor signal *S* to engine controller 20. Thus, engine controller 20 is given early warning that large power demands will be placed on low rotor 14 and high rotor 16. In response, engine controller 20 operates in conjunction with power controller 34 to increase the rotor speed and inertia energy in high spool 16 with energy from low spool 14. As a result, the engine excursion of engine 10 is reduced as excess power, beyond what is required for steady state load SS and thrust production, is generated using the inertia energy from both high spool 16 and low spool 14.

Generator 30 increases power extraction from low spool 14 from power *X*, which is what is required for steady state load *SS,* to power *X* + *ΔY*. Power *X* is continuously supplied to steady state load SS as is done in steady state operation illustrated in FIG. 1, but excess power *ΔY* is directed to generator-starter 32 through power controller 34. During precursor operation, generator-starter 32 acts as a motor as it receives electric power *ΔY* from power controller 34 and drives high spool 16 rotor speeds to higher speeds and a higher potential energy state. At which time, engine controller 20 undertakes measures, such as increasing fuel supply to combustor 18, to maintain steady state thrust production of engine 10.

FIG. 4B shows transient power system 12 of FIG. 4A in a pulse initiation mode. During pulse initiation mode, transient power *Z* is supplied to transient load *T* through power controller 34 from both low spool 14 and high spool 16. After the inertia energy of high spool 16 has ramped up with power *ΔY* supplied from generator-starter 32, generator-starter 32 extracts power *X + ΔY* from high spool 16 and directs it back to power controller 34. As such, an excess of energy is stored up in power extraction system 12 such that there is ready power available for transient load *T*.

Generator 30 begins to draw power *Z* - *ΔY* from low spool 14, wherein power *Z* represents the power required by transient load *T*. Power X + *ΔY* is likewise provided to power controller 34. Thus, power controller 34 directs power *Z* to transient load *T* by supplementing power *Z* - *ΔY* with power *+ΔY* from high spool 16 starter-generator32. The increased inertia energy *+ΔY* of high spool 16 complements reduced inertia energy -*ΔY* of low spool 18 to reduce the instantaneous impact on low spool 14 when the load is initially applied. Controller 34 also maintains power *X* to steady state load SS during the entire transient event. Once the transient load is applied, generator-starter 32 load *X +* ΔY begins to ramp down to *X* as it expends the additional stored inertia energy *ΔY.* Similarly, generator 30 load *Z*- *ΔY* increases to *Z* to compensate.

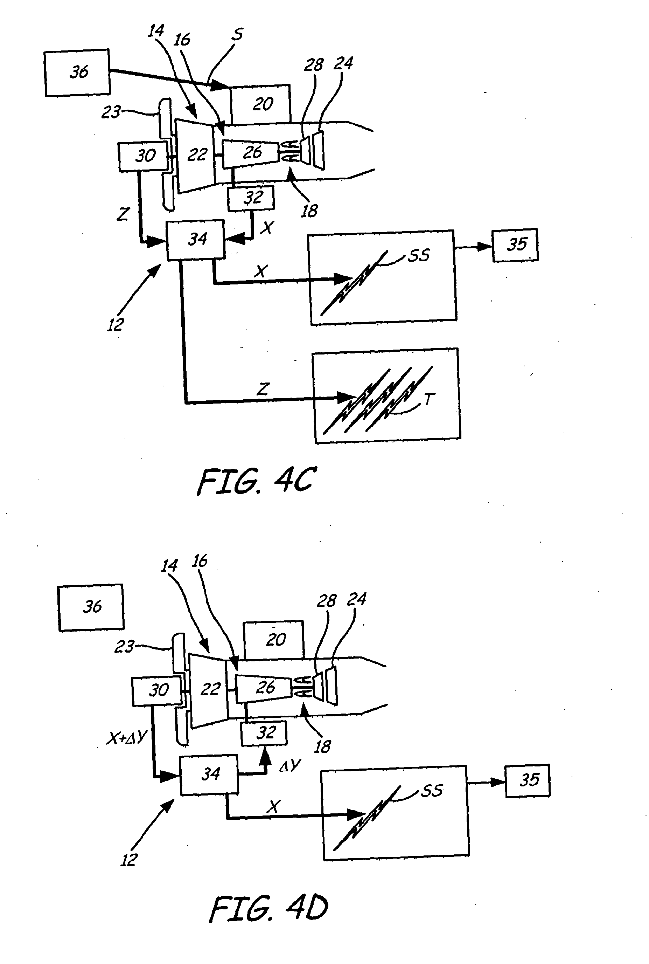

FIG. 4C shows transient power system 12 of FIG. 4B in an active pulse or sustained transient mode. This mode represents a pseudo-steady-state period where power controller 34 provides a continuous *Z* power plus *X* power from generator 30 and from starter-generator 32. Power controller 34 routes *Z* and *X* power to both the steady state SS and transient *T* loads.

FIG. 4D shows transient power system 12 of FIG. 4C in a pulse discharge mode. At which time, transient load *T* is removed from engine 10. As such generator 30 is no longer required to generate power *Z* and can reduce power extraction to steady state power level *X*. Thus, generator 30 draws power *X* to supply to steady state load *SS.* In order to ease the transition between high power loading and steady state operation such that engine excursion is reduced, generator 30 also draws power *ΔY.* Power *ΔY* is used to power high spool 16 to mitigate overspeed that typically results from removal of heavy loading. After high spool 16 ramps back up to speed, steady state operation of engine 10 resumes, such as depicted in FIG. 1.

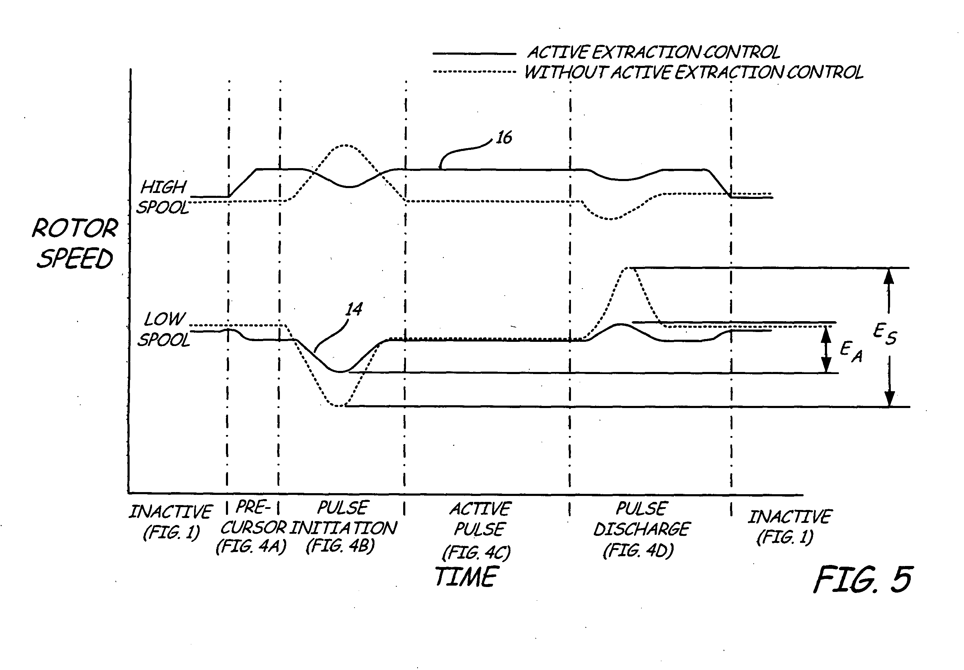

Leveraged power extraction as conducted by transient power extraction system 12 provides several advantages that assist in reducing thrust excursion of engine 10. For example, engine controller 20 receives load precursor signal S ahead of the time that the transient load is required, such as shown in FIG. 4A. As such, engine controller 20 is able to prepare engine 10, generator 30 and generator-starter 32 for high power extraction. Power extraction system 12 also increases high spool 16 rotor speed such that additional inertia energy is created and large ramping of high spool 16 and low spool 14 is reduced upon occurrence of the transient load, such as depicted in FIG. 4B. Engine excursion is also reduced by the immediate loading of low spool from generator 30 to drive high spool 16 using starter-generator 34 after removal of transient load *T*, such as shown in FIG. 4D. These examples of improvement in engine excursion are graphically depicted in FIG. 5.

FIG. 5 shows a graph comparing engine excursion over the life of a large transient load cycle for active extraction control of the present invention and a prior art system. The solid lines indicate the rotor speed for the high and low spools during active extraction control of the present invention. The dashed lines indicate rotor speeds for single rotor extraction without active extraction control. As can be seen from the graph, active extraction control of power extraction system 12 results in much smaller variation in rotor speed, thus leading to improved engine stability, thrust continuity, and power quality.

The left side of FIG. 5 shows rotor speed for operation of engine 10 at steady state operating conditions, such as depicted in FIG. 1, before a transient power load is required. Accordingly, active extraction control and single rotor extraction have similar rotor speeds.

During pulse on operation, single rotor extraction proceeds in a similar fashion to that of FIG. 3. When transient load *T* is switched on, low rotor 14 incurs additional resistance such that rotor speed is reduced, and the thrust output of engine 10 drops. Thus, engine controller 20 increases fuel flow to increase the speeds of high rotor 16 and low rotor 14 to bring the thrust levels back up to the desired steady state level. As performance of engine 10 adjusts to accommodate power production, high spool 16 and low spool 14 adjust back to steady state operational levels. During transient loading, single rotor extraction continues at near steady state operation. When the transient load is discharged, the load of transient load *T* is removed from generator 30 such that low spool 14 initially speeds up. The increased speed of low rotor 14 increases thrust requiring high spool 16 to slow down to maintain level thrust production. With transient load *T* removed, low spool 14 and high spool 16 gradually return to steady state speeds as engine operation stabilizes and thrust production is maintained. Thus, as described above, single rotor extraction without power extraction system 12 undergoes significant engine thrust excursion. As shown in FIG. 3, power extraction system 12 with leveraged power extraction reduces engine excursion. Power extraction system 12 further reduces engine excursion by incorporating active extraction control to increase the available inertia energy of engine 10.

With active extraction control, during the precursor phase, load signal S is sent to engine controller 20 such that the speeds of low spool 14 and high spool 16 are adjusted in anticipation of transient load *T*. An increased load is placed on low rotor 14 such that its speed decreases slightly. The increased load on low rotor 14 is used to generate power that is supplied to high spool 16. Thus, high spool 16 increases speed during the pre-cursor phase.

During transient load initiation phase the speed of low spool 14 decreases as transient load *T* begins to be drawn from power controller 34. Likewise, high spool 16 begins to contribute power to transient load *T* with generator-starter 32 and decreases speed as load *T* is initiated. Since high spool 16 is pre-loaded, it only drops down to speeds closer to steady state or non-transient operation. Additionally, since high spool 16 is contributing to powering transient load *T*, the entire burden is not put on low spool 14. Thus, low spool 14 undergoes a reduced reduction in rotor speed as transient load *T* is initiated.

While sustaining transient load *T*, low spool 14 and high spool 16 settle to a psudo-steady state condition with high spool 16 at an increased speed and low spool 14 at a reduced speed, until the transient load is terminated.

During pulse discharge operation, transient load *T* is no longer needed. Accordingly, loads on generator 30 and generator-starter 32 are reduced thereby reducing the loads on low spool 14 and eliminating the load on generator-starter 32. Generator 30 draws power *X* to supply steady state load *SS* and power *ΔY* to charge high spool 16. As such, low spool 14 increases speed as its load burden is reduced. In trying to keep thrust production steady, engine controller 20 would typically want to slow high spool 16 as thrust is increased from the faster rotating low spool 14. This produces engine excursion as high spool 16 is slowed to adjust for the fluctuating thrust production of low spool 14. However, power controller 34 redirects power from generator 30 and low spool 14 to high spool 16 to reduce high spool 16 excursion. Additionally, since the power burden on low spool 14 is not fully reduced to power *X*, but to power *X+ΔY,* low spool 14 exhibits a lower spike in speed. Thus, active extraction control of power extraction system 12 reduces low spool spike and drop over the life of transient load *T* correspondingly reducing excursion of engine 10. Power extraction system 12 can, again, further reduce engine excursion by putting engine 10 into a high inertia mode during transient loading.

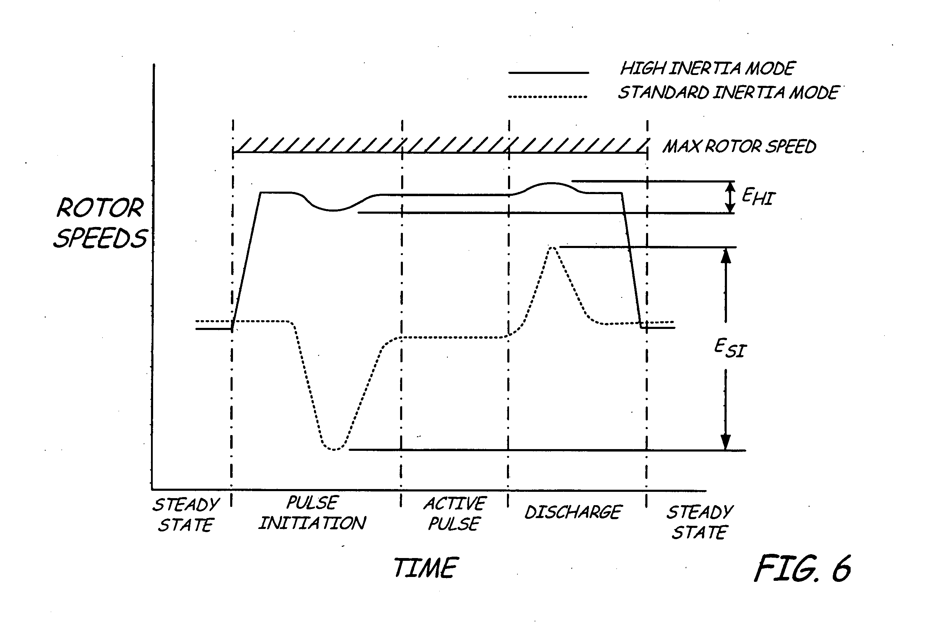

FIG. 6 shows a graph of engine excursion for a gas turbine engine using a high inertia extraction mode of power extraction system 12 of the present invention. The solid line represents the rotational speed of low spool 14 during high inertia extraction of transient load *T*. The dashed line represents the rotational speed of low spool 14 during single rotor extraction of transient load *T*. The top line in FIG. 6 represents the maximum rotor speed of low spool 14 such as is prescribed by mechanical limitations.

In addition to pre-loading high spool 16 as is done in active extraction control as shown in FIGS. 4A - 4D and plotted in FIG. 5, power extraction system 12 can increase the inertia energy of both high spool 16 and low spool 14 to further reduce engine excursion in response to signal *S*. As a result, the magnitude of the transient power load shrinks with respect to the total available power in engine 10. Thus, when transient load is applied against low spool 14 and high spool 16, rotor speed spike and drop represent a smaller proportion of the total rotor speed. Thus, variation in the operation of engine 10 is reduced during the life cycle of the transient load. High inertia extraction results in temporary reduced fuel efficiency, which is typically acceptable for short-term transient loads.

As shown in FIG. 6, the rotor speed of low spool 14 is increased during pulse initiation increased such that it is near its maximum. This is accomplished using various electrical and mechanical engine controls such as fan and compressor variable vanes, nozzles, fuel flow, engine controller 20 and power controller 34. When the transient load is applied to low spool 14 its speed decreases as the generator drags on low spool 14. The drop in speed of low spool 14 is reduced because of active extraction control such as shown in FIG. 5. Also, however, the drop in speed is slight compared to the overall speed of the rotor. Thus, the dip in speed produces a reduced variation in engine performance.

Likewise, during transient discharge mode, the speed of low spool 14 increases as the transient load is removed from generator 30 and low spool 14. The spike in the speed of low spool 14 is reduced as compared to single rotor extraction, as was explained with reference to FIG. 5. The effects of the spike are, however, mitigated as the spike is insignificant compared to the overall speed of low spool 14.

Thus, the dashed line represents a line similar to that as was presented in FIG. 5. The solid line represents a line similar to that as was presented in FIG. 5, but shifted higher due to the high inertia mode of power extraction system 12. As such, lower rotor extraction results in engine excursion *E_{SI},* and high inertia extraction of the present invention results in engine excursion *E_{HI}*, which is markedly reduced compared to single rotor extraction.

Although the present invention has been described with reference to preferred embodiments, workers skilled in the art will recognize that changes may be made in form and detail without departing from the scope of the invention.

## Claims

1. A power extraction system (12) for a gas turbine engine (10), the power extraction system comprising:
a low spool generator (30) for extracting power from a low spool (14) of the gas turbine engine (10);
a high spool generator (32) for extracting power from a high spool (16) of the gas turbine engine (10);
a power controller (34) for receiving power extracted by the low spool generator (30) and the high spool generator (32) and distributing the received power; and
wherein the power controller (34) provides an uninterrupted steady state power supply (SS) and a transient power supply (T) larger than the extracted power from either the low spool generator (30) or high spool generator (32) individually.

2. The power extraction system of claim 1 wherein the transient power supply (T) is derived from the high spool generator (32) and the low spool generator (30) such that engine excursion is reduced in the low spool (14) and the high spool (16).

3. The power extraction system of claim 2 and further comprising an engine controller (20) for controlling rotor speeds within the gas turbine engine (10) and a transient load generator for sending a pulse signal to the engine controller (20).

4. The power extraction system of claim 3 wherein the engine controller (20) maintains engine thrust output during powering of the transient load.

5. The power extraction system of claim 3 wherein high spool generator (32) comprises a generator-starter and the power controller (34) directs power generated by the low spool generator (30) to the high spool generator (32) in response to the transient load signal received by the engine controller (20) such that additional power can be generated from the high spool (16).

6. The power extraction system of claim 3 wherein the engine controller (34) increases inertia energy of the high spool (16) in response to the pulse signal.

7. The power extraction system of claim 3 wherein the power controller (34) directs power from the low spool generator (30) and the high spool generator (32) to the transient load (T) while maintaining the steady state load (SS).

8. The power extraction system of claim 3 wherein the engine controller (34) directs power generated by the low spool generator (30) to the high spool after the transient load is terminated to reduce engine excursion.

9. The power extraction system of claim 1 wherein the engine controller (20) increases inertia energy of the low spool (14) and the high spool (16) before powering the transient load such that engine excursion during transient power extraction comprises a lower proportion of rotor speed of the high and low spools (14, 16).

10. A power control system (12) for a gas turbine engine (10) comprising a low spool (14) and a high spool (16), the power control system (10) comprising:
a low spool generator (30) for extracting power from a low spool (14) of the gas turbine engine (10);
a high spool generator-starter (32) for extracting power from and supplying power to a high spool (16) of the gas turbine engine (10);
an engine controller (20) for controlling rotor speed of the high spool (16) and the low spool (14) of the gas turbine engine (10); and
a power controller (34) comprising:
a input element for receiving power extracted by the low spool generator (30) and the high spool generator (32); and
a switching element for selectively supplying power to the high spool (16) through the high spool generator-starter (32), steady state loads (SS) and transient loads (T);
wherein the power controller (34) and the engine controller (20) increase inertia energy of the low spool (14) and the high spool (16) such that power extraction can be coordinated to reduce engine excursion.

11. The power control system of claim 10 wherein the power controller (34) maintains engine thrust output during powering of the transient loads.

12. A method for supplying power to a steady state load (SS) and a transient load (T) in a gas turbine engine (10) having a high spool (16) and a low spool (14), the method comprising:
drawing power for the steady state load (SS) and supplemental power from the low spool (14) in response to a pulse signal;
pre-loading the high spool (16) with the supplemental power from the low spool (14) through a power controller (34) to overspeed the high spool (16);
switching power supply to the steady state load (SS) from the low spool (14) to the high spool (16);
drawing overspeed power from the high spool (16); and
supplying the transient load with power from the low spool (14) and the overspeed power such that engine excursion is reduced.

13. The method of claim 12 wherein the step of pre-loading the high spool (16) with the additional energy from the low spool (14) through the power controller (34) further comprises supplying steady state power (SS) to engine systems.

14. The method of claim 12 wherein the step of pre-loading the high spool (16) with the supplemental power comprises supplying the supplemental power to a generator-starter (32) that drives the high spool (16) to overspeed.

15. The method of claim 14 wherein the step of switching power supply to the steady state load (SS) from the low spool (14) to the high spool (16) comprises converting the generator-starter (32) from motor operation to generator operation.

16. The method of claim 12 and further comprising the step of discharging the transient load.

17. The method of claim 16 wherein the step of discharging the transient load comprises supplying steady state power to the steady state load (SS) from the high spool and supplying transient power to the transient load from the low spool (14) such that engine excursion is reduced.

18. The method of claim 16 and further comprising the step of providing overspeed power to the high spool (16) from the low spool (14) to reduce engine excursion after the transient load is terminated.

19. The method of claim 18 wherein the step of providing overspeed power to the high spool (16) comprises supplying steady state power to the steady state load (SS) from the low spool (14).

20. The method of claim 12 wherein the step of drawing power for the steady state load (SS) and supplemental power from the low spool (14) further comprises increasing inertia energy to the low spool (14) while maintaining engine thrust; and the step of drawing overspeed power from the high spool (16) further comprises increasing inertia energy to the high spool (16) while maintaining engine thrust.

21. The method of claim 20 wherein the increased inertia energy of the low spool (14) and the high spool (16) reduces a magnitude of engine excursion during transient power extraction as compared to overall engine rotor speeds.
